# EUROPÄISCHE PATENTSCHRIFT

(11) **EP 3 311 086 B1**
(45) Veröffentlichungstag und Bekanntmachung des Hinweises auf die Patenterteilung: **10.07.2024**
(21) Anmeldenummer: 16724416.9
(22) Anmeldetag: 23.05.2016
(51) Int. Cl.: F25D 23/06, F25D 25/02

(54) **KÄLTEGERÄTEVORRICHTUNG UND VERFAHREN ZU EINER MONTAGE EINER KÄLTEGERÄTEVORRICHTUNG**
REFRIGERATION DEVICE AND METHOD FOR ASSEMBLING A REFRIGERATION DEVICE
DISPOSITIF D'APPAREIL FRIGORIFIQUE ET PROCÉDÉ DE MONTAGE D'UN DISPOSITIF D'APPAREIL FRIGORIFIQUE

(30) Priorität: 22.06.2015 DE 102015211428
(43) Veröffentlichungstag der Anmeldung: 25.04.2018
(73) Patentinhaber: BSH Hausgeräte GmbH, 81739 München (DE)
(72) Erfinder: RUPP, Claudia, 73450 Neresheim (DE)
(86) Internationale Anmeldenummer: PCT/EP2016/061555
(87) Internationale Veröffentlichungsnummer: WO 2016/206890

(56) Entgegenhaltungen:
- EP-A2- 1 291 300
- DE-A1- 102012 201 107
- TW-A- 201 439 485
- US-A- 2 561 305
- US-A- 2 633 003
- US-A1- 2009 064 707

## Beschreibung

Die Erfindung betrifft eine Kältegerätevorrichtung nach dem unabhängigen Anspruch 1 und ein Verfahren zu einer Montage einer Kältegerätevorrichtung nach dem unabhängigen Anspruch 14.

Aus dem Stand der Technik ist bereits eine Kältegerätevorrichtung bekannt, bei welcher eine Gehäuseeinheit einen Zwischenraum definiert. Die Gehäuseeinheit weist ein Gehäuseelement und ein weiteres Gehäuseelement auf, die in einem montierten Zustand aneinander befestigt sind und den Zwischenraum begrenzen. In dem Zwischenraum ist in dem montierten Zustand ein Isolationselement angeordnet. Das Isolationselement könnte beispielsweise in den Zwischenraum eingespritzt worden sein. Alternativ könnte das Isolationselement ein vorgeformtes Element und in den Zwischenraum eingelegt sein. Eine gesonderte Befestigung des Isolationselements an zumindest einem der Befestigungselemente ist in keinem der beiden Fälle vorgesehen.

Ferner offenbart die Druckschrift US 2 633 003 A eine Kältegerätevorrichtung und ein Kältegerät damit. Weitere relevante Dokumente aus dem Stand der Technik sind EP1291300A2 und US2561305A.

Zudem ist aus der Druckschrift TW 201 439 485 A eine stoffschlüssige Verbindung zwischen einem Außengehäuse und einem Innengehäuse eines Kältegeräts bekannt, wobei ein Schmelzklebestoff zum Einsatz kommt, welcher gerade in einzelnen Streifen zwischen dem Innengehäuse und dem Außengehäuse aufgebracht ist, sodass mögliche Ausgasungen der Verklebung abgeführt werden können.

Des Weiteren ist aus der Druckschrift DE 10 2012 201 107 A1 ein Kältegerät mit einem Innengehäuse und einem Außengehäuse bekannt, wobei das Innengehäuse eine Trennwand ausbildet, welche einen Nutzraum des Kältegeräts in ein Normalkühlfach und ein Gefrierfach unterteilt. Zur Reduzierung von Kondensatbildung an unerwünschten Stellen in den jeweiligen Fächern, offenbart die genannte Druckschrift einen wärmeisolierenden Überzug, welcher lokal an einer dem jeweiligen Fach zugewandten Seite und Oberfläche des Innengehäuses angeordnet ist. Mittels des Überzugs können Kondensationen überwiegend an jeder lokalen Stelle erzwungen, vielmehr von unerwünschten Stellen dorthin verlagert werden, an welcher sich der Überzug an der Seite des Innengehäuses befindet.

Außerdem ist aus der Druckschrift US 2009/064707 A1 eine wärmeleitende Regalvorrichtung mit einem als Drahtgestell ausgebildeten Stützgestell zu entnehmen. Zumindest eine Wärmesenke ist innerhalb des Stützgestells anordenbar.

Die Aufgabe der Erfindung besteht insbesondere darin, eine gattungsgemäße Vorrichtung mit verbesserten Eigenschaften hinsichtlich Kosten bereitzustellen. Die Aufgabe wird erfindungsgemäß durch die Merkmale des Patentanspruchs 1 sowie durch das Verfahren des Patentanspruchs 14 gelöst, während vorteilhafte Ausgestaltungen und Weiterbildungen der Erfindung den Unteransprüchen entnommen werden können.

Die Erfindung geht aus von einer Kältegerätevorrichtung nach Anspruch 1, insbesondere einer Haushaltskältegerätevorrichtung und vorteilhaft einer Kühlgerätevorrichtung und/oder Gefriergerätevorrichtung, mit zumindest einer Gehäuseeinheit, welche zumindest einen Zwischenraum definiert und welche zumindest ein Gehäuseelement aufweist, das den Zwischenraum wenigstens teilweise begrenzt, und mit zumindest einem Isolationselement, welches in wenigstens einem montierten Zustand innerhalb des Zwischenraums angeordnet ist.

Die Kältegerätevorrichtung weist zumindest ein Befestigungselement auf, das von dem Isolationselement und zusätzlich von dem Gehäuseelement verschieden ausgebildet ist und das in dem montierten Zustand das Isolationselement und das Gehäuseelement zumindest stoffschlüssig aneinander befestigt. Unter einer "Kältegerätevorrichtung" ist eine Unterbaugruppe, eines Kältegeräts, insbesondere eines Haushaltskältegeräts, zu verstehen. Besonders vorteilhaft ist ein Kältegerät, insbesondere ein Haushaltskältegerät, dazu vorgesehen, in dem wenigstens einen Betriebszustand Kühlgut, insbesondere Lebensmittel wie beispielsweise Getränke, Fleisch, Fisch, Milch und/oder Milchprodukte, zu kühlen, insbesondere um eine längere Haltbarkeit der Kühlgüter zu bewirken. Bei dem Kältegerät, insbesondere dem Haushaltskältegerät, kann es sich insbesondere um eine Kühltruhe und vorteilhaft um einen Kühl- und/oder Gefrierschrank handeln. Die Gehäuseeinheit ist in dem montierten Zustand insbesondere einem Bediener zugewandt und/oder zugänglich angeordnet. Die Kältegerätevorrichtung offenbart alle technischen Merkmale des unabhängigen Anspruchs 1.

Das Gehäuseelement ist vorteilhaft als ein Formteil ausgebildet. Unter der Wendung, dass das Gehäuseelement zumindest einen Zwischenraum "wenigstens teilweise" begrenzt, soll insbesondere verstanden werden, dass das Gehäuseelement den Zwischenraum allein und/oder gemeinsam mit zumindest einem weiteren Gehäuseelement der Gehäuseeinheit begrenzt. Unter einem "Isolationselement" soll insbesondere ein Element verstanden werden, das eine Wärmeleitfähigkeit von maximal 1 W/(m*K), insbesondere von maximal 0,5 W/(m*K), vorteilhaft von maximal 0,1 W/(m*K), besonders vorteilhaft von maximal 0,05 W/(m*K), vorzugsweise von maximal 0,04 W/(m*K) und besonders bevorzugt von maximal 0,03 W/(m*K) aufweist. Das Isolationselement besteht insbesondere wenigstens zu einem Großteil aus einem Material, das insbesondere zu einem Plattenmaterial, vorteilhaft zu einem isolierenden Plattenmaterial, verarbeitbar ist. Beispielsweise könnte das Isolationselement wenigstens zu einem Großteil aus Schaumglas und/oder Kork und/oder Calostat und/oder Aerogel und/oder Zellulose bestehen. Vorteilhaft besteht das Isolationselement wenigstens zu einem Großteil aus PUR und/oder EPS und/oder EPP. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Unter der Wendung, dass ein Objekt in wenigstens einem montierten Zustand "innerhalb" des insbesondere von der Gehäuseeinheit begrenzten Zwischenraums angeordnet ist, soll insbesondere verstanden werden, dass das Objekt in dem montierten Zustand bezüglich eines Mittelpunkts und/oder Schwerpunkts des Objekts über einen Winkelbereich von mindestens 180°, insbesondere von mindestens 270°, vorteilhaft von mindestens 300°, besonders vorteilhaft von mindestens 330° und vorzugsweise von mindestens 350° von der Gehäuseeinheit umgeben ist. Das

Befestigungselement ist dazu vorgesehen, eine werkzeuglos unlösbare und stoffschlüssige Verbindung zwischen dem Gehäuseelement und dem Isolationselement herzustellen und/oder zu bewirken. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung können insbesondere geringe Kosten erreicht werden. Insbesondere kann in einfacher Weise eine hohe Stabilität und/oder eine feste Verbindung zwischen dem Isolationselement und dem Gehäuseelement erzielt werden.

Erfindungsgemäß ist das Befestigungselement als eine Klebeschicht ausgebildet. In dem montierten Zustand befestigt das Befestigungselement das Isolationselement und das Gehäuseelement mittels einer Klebeverbindung aneinander. Das Befestigungselement könnte beispielsweise ein doppelseitiges Klebeband sein. Alternativ oder zusätzlich könnte das Befestigungselement eine Beschichtung und/oder ein Lack sein. Das Befestigungselement könnte insbesondere zu einem Aufbringen auf dem Isolationselement und/oder auf dem Gehäuseelement mittels eines Druckverfahrens und/oder mittels eines Sprühverfahrens und/oder mittels eines Walzverfahrens und/oder mittels eines Beschichtungsverfahrens vorgesehen sein. Unter einer "Klebeschicht" soll insbesondere eine Schicht verstanden werden, welche in wenigstens einem montierten Zustand zwischen zumindest einem ersten Objekt, insbesondere dem Isolationselement, und zumindest einem zweiten Objekt, insbesondere dem Gehäuseelement und/oder zumindest einem weiteren Gehäuseelement, angeordnet ist und welche insbesondere dazu vorgesehen ist, das erste Objekt und das zweite Objekt insbesondere werkzeuglos unlösbar und vorzugsweise zumindest stoffschlüssig aneinander zu befestigen, insbesondere durch Adhäsionskräfte und/oder Kohäsionskräfte. Unter einer "Schicht" soll insbesondere ein Element verstanden werden, welches eine Dicke aufweist, die wesentlich kleiner ist als eine Breite und/oder eine Länge des Elements. Unter einer "Dicke" eines Objekts soll insbesondere eine kürzeste Erstreckung eines kleinsten gedachten geometrischen Quaders verstanden werden, welcher das Objekt gerade noch umschließt. Insbesondere ist eine Dicke eines Objekts wenigstens im Wesentlichen senkrecht zu einer Haupterstreckungsebene des Objekts ausgerichtet. Eine Länge eines Objekts und/oder einer Breite des Objekts ist insbesondere wenigstens im Wesentlichen parallel zu einer Haupterstreckungsebene des Objekts ausgerichtet. Vorzugsweise ist die Klebeschicht in wenigstens einem montierten Zustand mindestens an zumindest einem der Objekte, insbesondere an dem Isolationselement und/oder dem Gehäuseelement und/oder dem weiteren Gehäuseelement, angeordnet und/oder befestigt und/oder stoffschlüssig mit dem Objekt verbunden. Die Klebeschicht weist insbesondere eine Schichtdicke mit einem Wert auf, welcher maximal 25 %, insbesondere maximal 20 %, vorteilhaft maximal 15 %, besonders vorteilhaft maximal 10 %, vorzugsweise maximal 8 % und besonders bevorzugt maximal 5 % eines Werts einer Dicke des Objekts beträgt, an welchem die Klebeschicht in dem montierten Zustand befestigt ist. Insbesondere weist die Klebeschicht eine Schichtdicke mit einem Wert auf, welcher maximal 4 mm, insbesondere maximal 2 mm, vorteilhaft maximal 1,5 mm, besonders vorteilhaft maximal 1 mm, vorzugsweise maximal 0,5 mm und besonders bevorzugt maximal 0,2 mm beträgt. Die Schichtdicke eines Objekts ist insbesondere als eine Materialstärke ausgebildet, welche insbesondere wenigstens im Wesentlichen parallel zu einer Dicke des Objekts ausgerichtet ist, an welchem die Klebeschicht in dem montierten Zustand befestigt ist. Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Dadurch kann insbesondere eine hohe Stabilität erreicht werden.

Das Isolationselement ist als ein vorgeformtes Element ausgebildet Insbesondere ist das Isolationselement dazu vorgesehen, bei einer Herstellung insbesondere des Isolationselements insbesondere geschnitten und/ vorteilhaft in einem Werkzeug aufgeschäumt zu werden. Die Herstellung insbesondere des Isolationselements erfolgt insbesondere unabhängig von und vorteilhaft zeitlich gesehen vor einer Montage der Kältegerätevorrichtung. Vorteilhaft bleibt eine Gestalt und/oder Form des Isolationselements bei einer Befestigung des Isolationselements und des Gehäuseelements aneinander insbesondere wenigstens zu einem Großteil und vorteilhaft vollständig unverändert. Das Isolationselement weist insbesondere wenigstens im Wesentlichen plane, insbesondere geradlinige und/oder ebene, Oberflächen auf. Die Oberflächen des Isolationselements sind insbesondere als Schnittkanten ausgebildet. Insbesondere füllt das Isolationselement einen kleinsten gedachten geometrischen Quader, welcher das Isolationselement gerade noch umschließt, zu einem Volumenanteil von mindestens 90 %, insbesondere von mindestens 93 %, vorteilhaft von mindestens 95 %, besonders vorteilhaft von mindestens 97 % und vorzugsweise von mindestens 99 % aus. Insbesondere ist die Gehäuseeinheit, insbesondere das Gehäuseelement und zumindest ein weiteres Gehäuseelement der Gehäuseeinheit, frei von Schäumungsöffnungen. Eine Schäumungsöffnung ist insbesondere eine Öffnung, die zu einem Einbringen von Isolationsmaterial bei einem Schäumungsprozess und/oder zu einem Austreten von Fluid, insbesondere von Gas und vorteilhaft von Luft, bei dem Schäumungsprozess vorgesehen ist. Die Schäumungsöffnung könnte beispielsweise eine Eintrittsöffnung und/oder eine Fluidaustrittsöffnung sein. Dadurch kann insbesondere auf Eintrittsöffnungen, welche zu einem Einbringen von Isolationsmaterial bei einem Schäumungsprozess benötigt werden, und auf Fluidaustrittsöffnungen, welche zu einem Austreten von Fluid bei dem Schäumungsprozess benötigt werden, verzichtet werden. Das Gehäuseelement und/oder zumindest ein weiteres Gehäuseelement sind/ist vorteilhaft als ein Formteil und vorzugsweise als ein Spritzteil ausgebildet. Durch eine Verwendung von Formteilen kann insbesondere ein einfaches Montageverfahren ermöglicht werden, welches vorteilhaft aus einem einfachen Einlegen und Fügen einzelner Baueinheiten bestehen könnte. Auf einen Schäumungsprozess des Zwischenraums und/oder auf zumindest eine Schäumungs-Anlage, die zu einer Ausschäumung des Zwischenraums benötigt werden, kann verzichtet werden wodurch insbesondere geringe Kosten und/oder eine einfache Montage erreicht werden können/kann.

Weiterhin wird vorgeschlagen, dass das Befestigungselement eine Haupterstreckungsebene aufweist, welche in dem montierten Zustand wenigstens im Wesentlichen parallel zu einer Haupterstreckungsebene des Gehäuseelements ausgerichtet ist. Das Befestigungselement ist als ein flächiges Element ausgebildet. Das Befestigungselement erstreckt sich in wenigstens einem montierten Zustand über einen Anteil von mindestens 60 %, vorteilhaft von mindestens 70 %, besonders vorteilhaft von mindestens 80 %, vorzugsweise von mindestens 90 % und besonders bevorzugt von mindestens 95 % einer in dem montierten Zustand dem Isolationselement zugewandten Oberfläche des Gehäusebauteils und/oder einer in dem montierten Zustand dem Gehäusebauteil zugewandten Oberfläche des Isolationselements. Die Haupterstreckungsebene des Befestigungselements weist insbesondere einen Normalenvektor auf, der wenigstens im Wesentlichen parallel zu einem Normalenvektor der Haupterstreckungsebene des Gehäuseelements ausgerichtet ist. Unter "wenigstens im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Dadurch kann insbesondere eine große Klebefläche und/oder ein flächiger Kontakt zwischen dem Gehäuseelement und dem Isolationselement erreicht werden. Insbesondere kann eine hohe Stabilität erzielt werden.

Das Gehäuseelement könnte in dem montierten Zustand den Zwischenraum beispielsweise wenigstens im Wesentlichen und insbesondere vollständig begrenzen. Vorteilhaft weist die Gehäuseeinheit zumindest ein weiteres Gehäuseelement auf, welches in dem montierten Zustand den Zwischenraum wenigstens teilweise begrenzt. Insbesondere begrenzen das weitere Gehäuseelement und das Gehäuseelement in dem montierten Zustand den Zwischenraum insbesondere wenigstens im Wesentlichen und vorteilhaft vollständig. Das weitere Gehäuseelement begrenzt in dem montierten Zustand insbesondere eine dem Gehäuseelement abgewandte Seite des Zwischenraums. Die Haupterstreckungsebene des Gehäuseelements und eine Haupterstreckungsebene des weiteren Gehäuseelements sind in dem montierten Zustand insbesondere wenigstens im Wesentlichen parallel zueinander ausgerichtet. Dadurch kann insbesondere eine Sandwichbauweise ermöglicht und/oder eine preisgünstige Montage erzielt werden.

Zudem wird vorgeschlagen, dass das Gehäuseelement und das weitere Gehäuseelement ineinandergreifend angeordnet sind. Insbesondere existiert zumindest eine Gerade, welche ausgehend von einem ersten der Gehäuseelemente ein zweites der Gehäuseelemente und anschließend erneut das erste Gehäuseelement schneidet und welche insbesondere durch einen geometrischen Mittelpunkt des Zwischenraums verläuft. Dadurch kann insbesondere eine hohe Stabilität erzielt werden.

Eine dem weiteren Gehäusebauteil zugewandte Oberfläche des Isolationselements und eine dem Isolationselement zugewandte Oberfläche des weiteren Gehäusebauteils könnten in dem montierten Zustand insbesondere wenigstens abschnittsweise aneinander anliegen, insbesondere unter Vermeidung eines weiteren Befestigungselements. Vorzugsweise weist die Kältegerätevorrichtung zumindest ein weiteres Befestigungselement auf, das insbesondere von dem Insolationselement und vorzugsweise zusätzlich von dem Gehäuseelement verschieden ausgebildet ist und das in dem montierten Zustand das Isolationselement und das weitere Gehäuseelement zumindest stoffschlüssig aneinander befestigt. Vorteilhaft ist das weitere Gehäuseelement als eine Klebeschicht ausgebildet. Dadurch kann insbesondere eine stabile und/oder schubsteife Bauweise erreicht werden. Insbesondere können Bewegungen der Elemente relativ zueinander vermieden und/oder eine Geräuschentwicklung vorgebeugt werden. Insbesondere kann eine schubfeste und/oder zugfeste Verbindung zwischen den Gehäuseelementen und dem Isolationselement erreicht werden.

Ferner wird vorgeschlagen, dass das Isolationselement in dem montierten Zustand dazu vorgesehen ist, das Gehäuseelement und das weitere Gehäuseelement wenigstens abschnittsweise und vorteilhaft vollständig zueinander zu beabstanden.

Das Isolationselement kann dazu vorgesehen sein, in dem montierten Zustand eine insbesondere mittelbare Verbindung zwischen dem Gehäuseelement und dem weiteren Gehäuseelement herzustellen. Dabei kann das Isolationselement dazu ausgebildet sein, im Wesentlichen sämtliche Kräfte, die zwischen dem Gehäuseelement und dem weiteren Gehäuseelement übertragen werden, zwischen diesen beiden Elementen zu übertragen. Der Verbund von Isolationselement, Gehäuseelement, weiteres Gehäuseelement, Befestigungselement und weiterem Befestigungselement entspricht vorzugsweise einer Sandwichbauweise.

In dem montierten Zustand sind das Gehäuseelement und das weitere Gehäuseelement insbesondere frei von, insbesondere jeglichen, gemeinsamen Punkten. Dadurch kann insbesondere auf eine zusätzliche Befestigung der Gehäuseelemente untereinander und/oder auf zusätzliche Abstandshalter verzichtet werden. Insbesondere kann eine mechanische Überbestimmung wenigstens abschnittsweise und vorteilhaft vollständig vermieden werden.

Vorzugsweise ist vorgesehen, dass das weitere Gehäuseelement ausschließlich durch das weitere Befestigungselement mit dem Isolationselement verbunden ist. Weiter kann vorgesehen sein, dass das Isolationselement ausschließlich über das Befestigungselement mit dem Gehäuseelement verbunden ist.

Die Gehäuseeinheit könnte beispielsweise eine äußere Form einer Trennwand von einem die Kältegerätevorrichtung aufweisenden Kältegerät ausbilden. Dabei könnte die Gehäuseeinheit eine äußere Form eines Abstellfachs und/oder eines Ablagefachs und/oder eines Regals ausbilden. Die Gehäuseeinheit ist als eine Trennplatte ausgebildet. Die Gehäuseeinheit ist dazu vorgesehen, in dem montierten Zustand zumindest zwei Temperaturbereiche, welche insbesondere unterschiedliche Temperaturen aufweisen, gegeneinander abzugrenzen. Die als Trennplatte ausgebildete Gehäuseeinheit ist dazu vorgesehen, in dem montierten Zustand zumindest einen Lebensmittelaufnahmeraum in zumindest zwei Temperaturbereiche zu unterteilen, welche insbesondere eine Mindest-Temperaturdifferenz von mindestens 2°C, vorteilhaft von mindestens 3°C und vorzugsweise von mindestens 4°C aufweisen. Insbesondere ist die als Trennplatte ausgebildete Gehäuseeinheit dazu vorgesehen, in dem montierten Zustand zumindest einen Lebensmittelaufnahmeraum in zumindest zwei Temperaturbereiche zu unterteilen, welche insbesondere eine Maximal-Temperaturdifferenz von maximal 50°C, insbesondere von maximal 35°C, vorteilhaft von maximal 20°C, besonders vorteilhaft von maximal 10°C und vorzugsweise von maximal 8°C aufweisen. Der Lebensmittelaufnahmeraum könnte beispielsweise ein Kühlraum und/oder ein Gefrierraum sein. Dadurch kann insbesondere eine Lagerung von Lebensmitteln bei unterschiedlichen Temperaturen und/oder eine einfache Unterteilung eines Lebensmittelaufnahmeraums in unterschiedliche Temperaturbereiche ermöglicht werden.

Weiterhin wird vorgeschlagen, dass das Isolationselement den Zwischenraum wenigstens zu einem Großteil ausfüllt, wodurch insbesondere eine hohe Energieeffizienz erreicht werden kann.

Vorteilhaft geringe Kosten können insbesondere erreicht werden durch ein Kältegerät, insbesondere ein Haushaltskältegerät und vorteilhaft ein Kühlgerät und/oder Gefriergerät, mit zumindest einer erfindungsgemäßen Kältegerätevorrichtung.

Erfindungsgemäß wird ein Verfahren gemäß dem Anspruch 14 zu einer Montage einer erfindungsgemäßen Kältegerätevorrichtung nach Anspruch 1 offenbart, mit zumindest einer Gehäuseeinheit, welche zumindest einen Zwischenraum definiert und welche zumindest ein Gehäuseelement aufweist, das den Zwischenraum wenigstens teilweise begrenzt, und mit zumindest einem Isolationselement, welches innerhalb des Zwischenraums angeordnet wird, wobei die Gehäuseeinheit auf Vorsprüngen aufgelegt und/oder in Nuten eingeschoben wird, und mit zumindest einem Befestigungselement, mittels welchem das Isolationselement und das Gehäuseelement zumindest stoffschlüssig aneinander befestigt werden, wobei das Befestigungselement als eine Klebeschicht ausgebildet ist. Dadurch können insbesondere geringe Kosten und/oder eine hohe Stabilität erreicht werden. Insbesondere kann eine schnelle und/oder unkomplizierte Montage ermöglicht werden.

Beispielsweise könnte das Befestigungselement vor einer Befestigung an dem Isolationselement an dem Gehäuseelement befestigt werden. Vorteilhaft wird vorgeschlagen, dass das Befestigungselement vor einer Befestigung an dem Gehäuseelement an dem Isolationselement befestigt wird, wodurch insbesondere eine Montage der Kältegerätevorrichtung optimiert werden kann.

Die Kältegerätevorrichtung soll hierbei nicht auf die oben beschriebene Anwendung und Ausführungsform beschränkt sein. Insbesondere kann die Kältegerätevorrichtung zu einer Erfüllung einer hierin beschriebenen Funktionsweise eine von einer hierin genannten Anzahl von einzelnen Elementen, Bauteilen und Einheiten abweichende Anzahl aufweisen. Die vorliegende Erfindung ist in den unabhängigen Ansprüchen 1 und 14 offenbart. Weitere Ausführungsbeispiele sind in den abhängigen Ansprüchen offenbart. Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Kältegerät mit einer Kältegerätevorrichtung in einem geschlossenen Zustand in einer schematischen perspektivischen Darstellung, die nicht ein Teil der vorliegenden Erfindung ist.
- Fig. 2: das Kältegerät mit der Kältegerätevorrichtung in einem teilweise geöffneten Zustand in einer schematischen perspektivischen Darstellung, die nicht ein Teil der vorliegenden Erfindung ist.
- Fig. 3: eine Gehäuseeinheit der Kältegerätevorrichtung gemäß der vorliegenden Erfindung in einer schematischen perspektivischen Darstellung,
- Fig. 4: die Gehäuseeinheit, ein Befestigungselement der Kältegerätevorrichtung und ein weiteres Befestigungselement der Kältegerätevorrichtung in einer schematischen Schnittdarstellung,
- Fig. 5: eine Gehäuseeinheit einer alternativen Kältegerätevorrichtung gemäß der vorliegenden Erfindung in einer schematischen perspektivischen Darstellung,
- Fig. 6: die Gehäuseeinheit, ein Befestigungselement der Kältegerätevorrichtung und ein weiteres Befestigungselement der Kältegerätevorrichtung in einer schematischen Explosionsdarstellung und
- Fig. 7: die Gehäuseeinheit, das Befestigungselement und das weitere Befestigungselement in einer schematischen Schnittdarstellung.

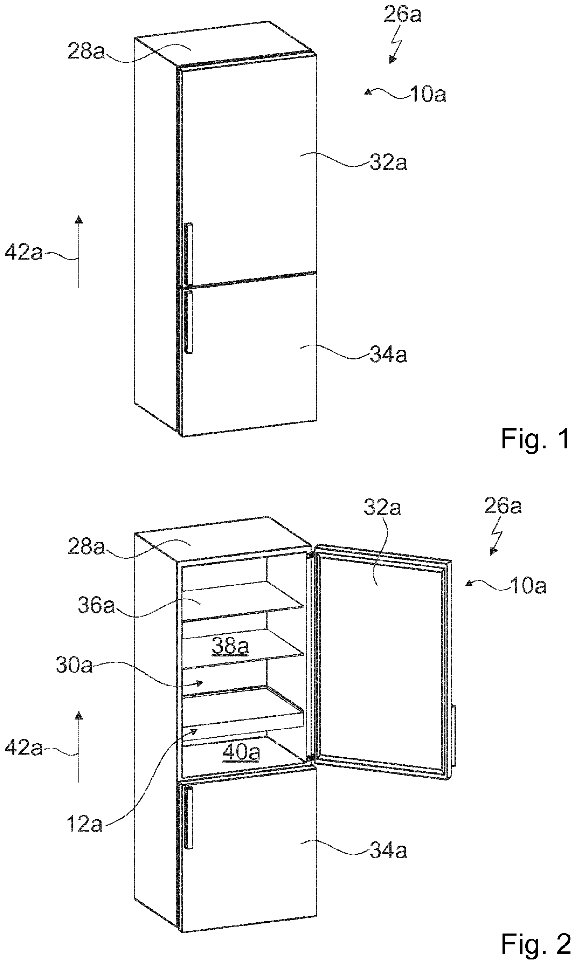

Fig. 1 zeigt ein Kältegerät 26a, das als ein Haushaltskältegerät ausgebildet ist, mit einer Kältegerätevorrichtung 10a, die nicht ein Teil der vorliegenden Erfindung ist und die als eine Haushaltskältegerätevorrichtung ausgebildet ist

Das Kältegerät 26a ist als ein Kühlgerät und als ein Gefriergerät, insbesondere als ein Kühl-Gefrier-Kombinationsgerät, ausgebildet. Die Kältegerätevorrichtung 10a weist einen Kältegerätekorpus 28a auf.

Der Kältegerätekorpus 28a definiert teilweise einen ersten Lebensmittelaufnahmeraum 30a (vgl. Fig. 1 und 2). Der erste Lebensmittelaufnahmeraum 30a ist als ein Kühlraum ausgebildet. Die Kältegerätevorrichtung 10a weist eine erste Tür 32a auf. Die erste Tür 32a ist schwenkbar relativ zu dem Kältegerätekorpus 28a gelagert. In einem geschlossenen Zustand verschließt die erste Tür 32a den ersten Lebensmittelaufnahmeraum 30a.

Der Kältegerätekorpus 28a definiert teilweise einen zweiten Lebensmittelaufnahmeraum (nicht dargestellt). Der zweite Lebensmittelaufnahmeraum ist als ein Gefrierraum ausgebildet. Die Kältegerätevorrichtung 10a weist eine zweite Tür 34a auf. Die zweite Tür 34a ist schwenkbar relativ zu dem Kältegerätekorpus 28a gelagert. In einem geschlossenen Zustand verschließt die zweite Tür 34a den zweiten Lebensmittelaufnahmeraum. Der zweite Lebensmittelaufnahmeraum ist in einer Einbaulage unterhalb des ersten Lebensmittelaufnahmeraums 30a angeordnet.

Die Kältegerätevorrichtung 10a weist zwei Ablagefächer 36a auf (vgl. Fig. 2). Von mehrfach vorhandenen Objekten ist in den Figuren jeweils lediglich eines mit einem Bezugszeichen versehen. Die Ablagefächer 36a sind in einem Betriebszustand in dem ersten Lebensmittelaufnahmeraum 30a angeordnet. In dem Betriebszustand sind die Ablagefächer 36a zu einem Aufstellen und/oder Auflegen von Lebensmitteln vorgesehen. Ein erstes Ablagefach 36a ist in dem Betriebszustand in einem oberen Bereich des ersten Lebensmittelaufnahmeraums 30a angeordnet. Ein zweites Ablagefach 36a ist in dem Betriebszustand in einem mittleren Bereich des ersten Lebensmittelaufnahmeraums 30a angeordnet.

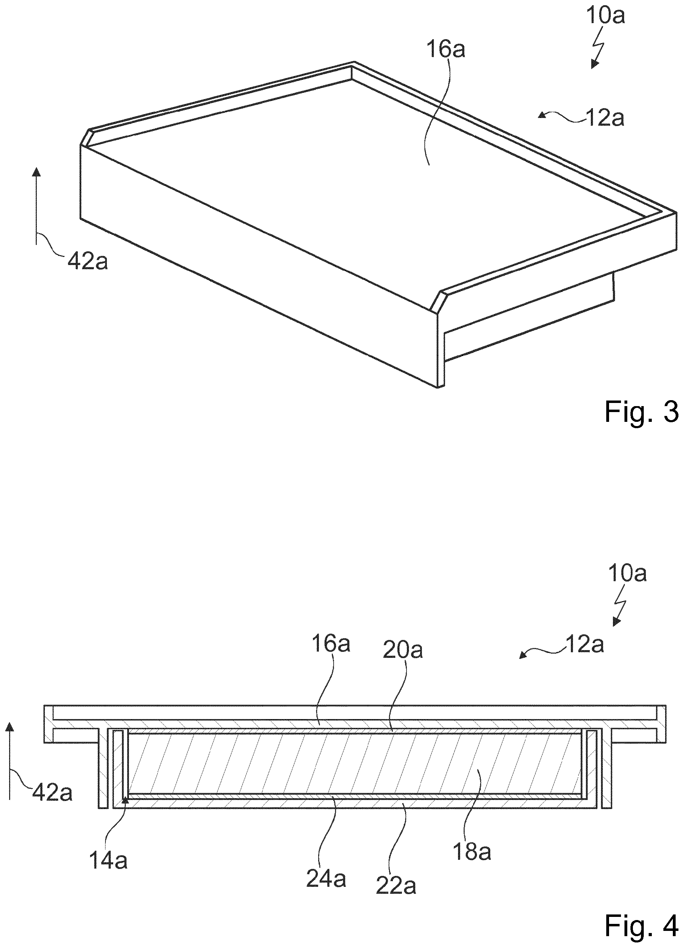

Die Kältegerätevorrichtung 10a nach Anspruch 1 weist eine Gehäuseeinheit 12a auf (vgl. Fig. 3 und 4). Die Gehäuseeinheit 12a ist in dem Betriebszustand in dem ersten Lebensmittelaufnahmeraum 30a angeordnet. In dem Betriebszustand ist die Gehäuseeinheit 12a unterhalb der Ablagefächer 36a angeordnet.

Gemäß der vorliegenden Erfindung ist die Gehäuseeinheit 12a als eine Trennplatte ausgebildet. Die Gehäuseeinheit 12a unterteilt den ersten Lebensmittelaufnahmeraum 30a in zwei Temperaturbereiche 38a, 40a. Ein erster Temperaturbereich 38a ist in dem Betriebszustand oberhalb der Gehäuseeinheit 12a angeordnet. Der erste Temperaturbereich 38a weist eine Temperatur von im Wesentlichen 8°C auf. Ein zweiter Temperaturbereich 40a ist in dem Betriebszustand unterhalb der Gehäuseeinheit 12a angeordnet. Der zweite Temperaturbereich 40a weist eine Temperatur von im Wesentlichen 2°C auf.

Die Gehäuseeinheit 12a definiert einen Zwischenraum 14a (vgl. Fig. 4). Eine Erstreckung der Gehäuseeinheit 12a in einer Vertikalrichtung 42a ist größer als eine Erstreckung der Ablagefächer 36a in der Vertikalrichtung 42a. Die Vertikalrichtung 42a ist im Wesentlichen senkrecht zu einem Untergrund ausgerichtet.

Die Gehäuseeinheit 12a weist ein Gehäuseelement 16a auf (vgl. Fig. 3 und 4). Das Gehäuseelement 16a ist als ein vorgeformtes Element ausgebildet. Das Gehäuseelement 16a begrenzt teilweise den Zwischenraum 14a.

Die Gehäuseeinheit 12a weist ein weiteres Gehäuseelement 22a auf (vgl. Fig. 3 und 4). Das weitere Gehäuseelement 22a ist als ein vorgeformtes Element ausgebildet. In einem montierten Zustand sind das Gehäuseelement 16a und das weitere Gehäuseelement 22a einander gegenüberliegend angeordnet. Das weitere Gehäuseelement 22a begrenzt teilweise den Zwischenraum 14a.

In dem montierten Zustand sind das Gehäuseelement 16a und das weitere Gehäuseelement 22a ineinandergreifend angeordnet (vgl. Fig. 4). Eine Haupterstreckungsebene des Gehäuseelements 16a und eine Haupterstreckungsebene des weiteren Gehäuseelements 22a sind in dem montierten Zustand im Wesentlichen parallel zueinander ausgerichtet. Im Wesentlichen senkrecht zu der Haupterstreckungsebene des weiteren Gehäuseelements 22a ausgerichtete Gehäuseteile des weiteren Gehäuseelements 22a sind in dem montierten Zustand von im Wesentlichen senkrecht zu der Haupterstreckungsebene des Gehäuseelements 16a ausgerichteten Gehäuseteilen des Gehäuseelements 16a im Wesentlichen umgeben.

Die Gehäuseeinheit 12a weist ein Isolationselement 18a auf (vgl. Fig. 4). Das Isolationselement 18a ist als ein vorgeformtes Element ausgebildet. In dem montierten Zustand ist das Isolationselement 18a innerhalb des Zwischenraums 14a angeordnet. Das Isolationselement 18a füllt den Zwischenraum 14a in dem montierten Zustand zu einem Großteil aus.

Die Kältegerätevorrichtung 10a weist ein Befestigungselement 20a auf (vgl. Fig. 4). In dem montierten Zustand ist das Befestigungselement 20a innerhalb des Zwischenraums 14a angeordnet. Das Befestigungselement 20a befestigt in dem montierten Zustand das Isolationselement 18a und das Gehäuseelement 16a stoffschlüssig aneinander.

Gemäß der vorliegenden Erfindung ist das Befestigungselement 20a als eine Klebeschicht ausgebildet.

Das Befestigungselement 20a weist eine Haupterstreckungsebene auf. In dem montierten Zustand ist die Haupterstreckungsebene des Befestigungselements 20a im Wesentlichen parallel zu einer Haupterstreckungsebene des Gehäuseelements 16a ausgerichtet. Die Haupterstreckungsebene des Befestigungselements 20a ist in dem montierten Zustand im Wesentlichen parallel zu einer Haupterstreckungsebene des Isolationselements 18a ausgerichtet.

Eine Flächenerstreckung des Befestigungselements 20a parallel zu der Haupterstreckungsebene des Befestigungselements 20a entspricht im Wesentlichen einer Flächenerstreckung des Isolationselements 18a parallel zu der Haupterstreckungsebene des Befestigungselements 20a. Das Befestigungselement 20a ist in dem montierten Zustand im Wesentlichen vollflächig auf dem Isolationselement 18a aufgebracht.

Die Kältegerätevorrichtung 10a weist ein weiteres Befestigungselement 24a auf (vgl. Fig. 4). In dem montierten Zustand ist das weitere Befestigungselement 24a innerhalb des Zwischenraums 14a angeordnet. Das weitere Befestigungselement 24a befestigt in dem montierten Zustand das Isolationselement 18a und das weitere Gehäuseelement 22a stoffschlüssig aneinander. Im vorliegenden Ausführungsbeispiel ist das weitere Befestigungselement 24a als eine Klebeschicht ausgebildet.

In dem montierten Zustand ist das Isolationselement 18a zwischen dem Gehäuseelement 16a und dem weiteren Gehäuseelement 22a angeordnet. Das Isolationselement 18a beabstandet in dem montierten Zustand das Gehäuseelement 16a und das weitere Gehäuseelement 22a abschnittsweise zueinander. Im vorliegenden Ausführungsbeispiel beabstandet das Isolationselement 18a in dem montierten Zustand das Gehäuseelement 16a und das weitere Gehäuseelement 22a vollständig zueinander.

In einem Verfahren gemäß dem Anspruch 14 zu einer Montage der Kältegerätevorrichtung 10a werden das Isolationselement 18a und das Gehäuseelement 16a mittels des Befestigungselements 20a stoffschlüssig aneinander befestigt. Vor einer Befestigung an dem Gehäuseelement 16a wird das Befestigungselement 20a an dem Isolationselement 18a befestigt. Mittels des weiteren Befestigungselements 24a werden das Isolationselement 18a und das weitere Gehäuseelement 22a stoffschlüssig aneinander befestigt. Vor einer Befestigung an dem weiteren Gehäuseelement 22a wird das weitere Befestigungselement 24a an dem Isolationselement 18a befestigt.

In dem Verfahren wird das Isolationselement 18a innerhalb des Zwischenraums 14a angeordnet. Das Isolationselement 18a wird mit den an dem Isolationselement 18a befestigten Befestigungselementen 20a, 24a innerhalb des Zwischenraums 14a angeordnet.

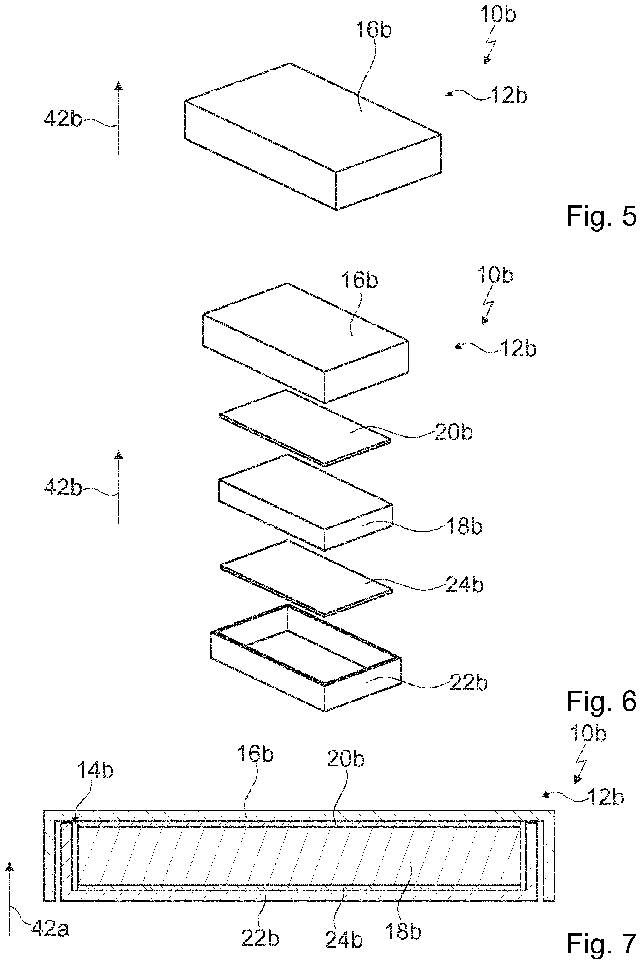

In Fig. 5 bis 7 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 3 und 4 verwiesen werden kann. Zur Unterscheidung der Ausführungsbeispiele ist der Buchstabe a in den Bezugszeichen des Ausführungsbeispiels in den Fig. 3 und 4 durch den Buchstaben b in den Bezugszeichen des Ausführungsbeispiels der Fig. 5 bis 7 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 3 und 4 verwiesen werden.

Fig. 5 zeigt eine Gehäuseeinheit 12b einer alternativen Kältegerätevorrichtung 10b nach Anspruch 1. Die Gehäuseeinheit 12b weist eine im Wesentlichen quaderförmige Gestalt auf. Die Gehäuseeinheit ist zu einem Auflegen auf Vorsprüngen vorgesehen, welche insbesondere in einem Lebensmittelaufnahmeraum vorteilhaft auf zwei einander gegenüberliegenden Seiten angeordnet sein könnten. Alternativ oder zusätzlich ist die Gehäuseeinheit zu einem Einschieben in Nuten vorgesehen, welche insbesondere in einem Lebensmittelaufnahmeraum vorteilhaft auf zwei einander gegenüberliegenden Seiten angeordnet sein könnten.

### Bezugszeichen

- 10: Kältegerätevorrichtung
- 12: Gehäuseeinheit
- 14: Zwischenraum
- 16: Gehäuseelement
- 18: Isolationselement
- 20: Befestigungselement
- 22: Weiteres Gehäuseelement
- 24: Weiteres Befestigungselement
- 26: Kältegerät
- 28: Kältegerätekorpus
- 30: Erster Lebensmittelaufnahmeraum
- 32: Erste Tür
- 34: Zweite Tür
- 36: Ablagefach
- 38: Erster Temperaturbereich
- 40: Zweiter Temperaturbereich
- 42: Vertikalrichtung

## Patentansprüche

1. Kältegerätevorrichtung (10a, 10b), welche eine Unterbaugruppe eines Kältegeräts (26a) ist, mit zumindest einer Gehäuseeinheit (12a-b), welche zumindest einen Zwischenraum (14ab) definiert und welche zumindest ein Gehäuseelement (16a-b) aufweist, das den Zwischenraum (14a-b) wenigstens teilweise begrenzt, und mit zumindest einem Isolationselement (18a-b), welches in wenigstens einem montierten Zustand innerhalb des Zwischenraums (14a-b) angeordnet ist, wobei die Gehäuseeinheit (12a-b) als eine Trennplatte ausgebildet ist, wobei die Gehäuseeinheit (12a-b) zu einem Auflegen auf Vorsprüngen und/oder zu einem Einschieben in Nuten vorgesehen ist, wobei die als Trennplatte ausgebildete Gehäuseeinheit (12a-b) dazu vorgesehen ist, in dem montierten Zustand zumindest einen Lebensmittelaufnahmeraum (30a) eines Kältegeräts (26a) in zumindest zwei Temperaturbereiche zu unterteilen, wobei es zumindest ein Befestigungselement (20a, 20b) gibt, das in dem montierten Zustand das Isolationselement (18a-b) und das Gehäuseelement (16a-b) zumindest stoffschlüssig aneinander befestigt, wobei das Befestigungselement (20a-b) als eine Klebeschicht ausgebildet ist und dass das Befestigungselement (20a-b) als ein flächiges Element ausgebildet ist und sich das Befestigungselement (20a-b) in dem wenigstens einen montierten Zustand über einen Anteil von mindestens 60 %, vorteilhaft von mindestens 70 %, besonders vorteilhaft von mindestens 80 %, vorzugsweise von mindestens 90 % und besonders bevorzugt von mindestens 95 % einer in dem montierten Zustand dem Isolationselement (18a-b) zugewandten Oberfläche des Gehäuseelements (16a-b) und/oder einer in dem montierten Zustand dem Gehäuseelement (16a-b) zugewandten Oberfläche des Isolationselements (18a-b) erstreckt, und wobei das Isolationselement (18a-b) als ein vorgeformtes Element ausgebildet ist.

2. Kältegerätevorrichtung nach Anspruch 1, **dadurch gekennzeichnet, dass** das Befestigungselement (20a-b) eine Haupterstreckungsebene aufweist, welche in dem montierten Zustand wenigstens im Wesentlichen parallel zu einer Haupterstreckungsebene des Gehäuseelements (16a-b) ausgerichtet ist.

3. Kältegerätevorrichtung nach einem der vorhergehenden Ansprüche, **dadurch gekennzeichnet, dass** die Gehäuseeinheit (12a-b) zumindest ein weiteres Gehäuseelement (22a-b) aufweist, welches in dem montierten Zustand den Zwischenraum (14a-b) wenigstens teilweise begrenzt.

4. Kältegerätevorrichtung nach Anspruch 3, **dadurch gekennzeichnet, dass** das Gehäuseelement (16a-b) und das weitere Gehäuseelement (22a-b) ineinandergreifend angeordnet sind.

5. Kältegerätevorrichtung nach Anspruch 3 oder 4, **gekennzeichnet durch** zumindest ein weiteres Befestigungselement (24a-b), das in dem montierten Zustand das Isolationselement (18a-b) und das weitere Gehäuseelement (22a-b) zumindest stoffschlüssig aneinander befestigt.

6. Kältegerätevorrichtung nach einem der Ansprüche 3 bis 5, **dadurch gekennzeichnet, dass** das Isolationselement (18a-b) in dem montierten Zustand dazu vorgesehen ist, das Gehäuseelement (16a-b) und das weitere Gehäuseelement (22a-b) wenigstens abschnittsweise zueinander zu beabstanden.

7. Kältegerätevorrichtung nach einem der Ansprüche 3 bis 6, **dadurch gekennzeichnet, dass** das Isolationselement in dem montierten Zustand eine insbesondere mittelbare Verbindung zwischen dem Gehäuseelement und dem weiteren Gehäuseelement herstellt.

8. Kältegerätevorrichtung nach einem der Ansprüche 3 bis 7, **dadurch gekennzeichnet, dass** in dem montierten Zustand das Gehäuseelement und das weitere Gehäuseelement frei von, insbesondere jeglichen, gemeinsamen Punkten sind.

9. Kältegerätevorrichtung nach einem der vorhergehenden Ansprüche, **dadurch gekennzeichnet, dass** das Isolationselement (18a-b) den Zwischenraum (14a-b) wenigstens zu einem Großteil ausfüllt.

10. Kältegerätevorrichtung nach einem der vorhergehenden Ansprüche, **dadurch gekennzeichnet, dass** das Isolationselement (18a-b) wenigstens zu einem Großteil aus PUR und/oder EPS und/oder EPP besteht.

11. Kältegerätevorrichtung nach einem der vorhergehenden Ansprüche, **dadurch gekennzeichnet, dass** das Befestigungselement (20a-b) ein doppelseitiges Klebeband ist.

12. Kältegerätevorrichtung nach einem der vorhergehenden Ansprüche, **dadurch gekennzeichnet, dass** das die Gehäuseeinheit (12a-b), insbesondere das Gehäuseelement (16a-b) und zumindest ein weiteres Gehäuseelement (22a-b) der Gehäuseeinheit (12a-b), frei von Schäumungsöffnungen ist.

13. Kältegerät, insbesondere Kühlgerät und/oder Gefriergerät, mit zumindest einer Kältegerätevorrichtung (10a-b) nach einem der vorhergehenden Ansprüche.

14. Verfahren zu einer Montage einer Kältegerätevorrichtung (10a-b) nach einem der Ansprüche 1 bis 12, welche eine Unterbaugruppe eines Kältegeräts ist, mit zumindest einer Gehäuseeinheit (12a-b), welche zumindest einen Zwischenraum (14a-b) definiert und welche zumindest ein Gehäuseelement (16a-b) aufweist, das den Zwischenraum (14a-b) wenigstens teilweise begrenzt, und mit zumindest einem Isolationselement (18a-b), welches innerhalb des Zwischenraums (14a-b) angeordnet wird, wobei die Gehäuseeinheit (12a-b) auf Vorsprünge aufgelegt und/oder in Nuten eingeschoben wird, wobei mittels der als Trennplatte ausgebildeten Gehäuseeinheit (12a-b) zumindest ein Lebensmittelaufnahmeraum (30a) eines Kältegeräts (26a) 2 in zumindest zwei Temperaturbereiche unterteilt wird, wobei mittels zumindest eines Befestigungselements (20a-b) der Kältegerätevorrichtung (10a-b) das Isolationselement (18a-b) und das Gehäuseelement (16a-b) zumindest stoffschlüssig aneinander befestigt wird, wobei das Befestigungselement (20a-b) als ein flächiges Element und als eine Klebeschicht ausgebildet ist, wobei das Befestigungselement (20a-b) über einen Anteil von mindestens 60 % auf einer dem Isolationselement (18a-b) zugewandten Oberfläche des Gehäuseelements (16a-b) und/oder einer dem Gehäuseelement (16a-b) zugewandten Oberfläche des Isolationselements (18a-b) erstreckend angeordnet wird, und wobei das Isolationselement (18a-b) als ein vorgeformtes Element ausgebildet ist.

15. Verfahren nach Anspruch 14, **dadurch gekennzeichnet, dass** das Befestigungselement (20a-b) vor einer Befestigung an dem Gehäuseelement (16a-b) an dem Isolationselement (18a-b) befestigt wird.

## Claims

1. Refrigeration appliance apparatus (10a, 10b) which is a subassembly of a refrigeration appliance (26a), with at least one housing unit (12a-b) which defines at least one intermediate space (14a-b) and which has at least one housing element (16a-b) which delimits the intermediate space (14a-b) at least partially, and with at least one insulation element (18a-b) which is arranged inside the intermediate space (14a-b) in at least one assembled state, wherein the housing unit (12a-b) is designed as a separating plate, wherein the housing unit (12a-b) is provided for resting on projections and/or for inserting in grooves, wherein the housing unit (12a-b) designed as a separating plate is provided to divide at least one receiving compartment for food (30a) of a refrigeration appliance (26a) into at least two temperature regions in the assembled state, wherein there is at least one fastening element (20a, 20b), which in the assembled state fastens the insulation element (18a-b) and the housing element (16a-b) to one another at least by a material bond, wherein the fastening element (20a-b) is designed as an adhesive layer and that the fastening element (20a-b) is designed as a planar element and, in the at least one assembled state, the fastening element (20a-b) extends over a proportion of at least 60 %, advantageously of at least 70 %, particularly advantageously of at least 80 %, preferably of at least 90 % and particularly preferably of at least 95 % of a surface of the housing element (16a-b) which faces the insulation element (18a-b) in the assembled state and/or of a surface of the insulation element (18a-b) which faces the housing element (16a-b) in the assembled state, and wherein the insulation element (18a-b) is designed as a preformed element.

2. Refrigeration appliance apparatus according to claim 1, **characterised in that** the fastening element (20a-b) has a main extension plane, which is aligned at least essentially parallel to a main extension plane of the housing element (16a-b) in the assembled state.

3. Refrigeration appliance apparatus according to one of the preceding claims, **characterised in that** the housing unit (12a-b) has at least one further housing element (22a-b), which delimits the intermediate space (14a-b) at least partially in the assembled state.

4. Refrigeration appliance apparatus according to claim 3, **characterised in that** the housing element (16a-b) and the further housing element (22a-b) are arranged so as to interlock with one another.

5. Refrigeration appliance apparatus according to claim 3 or 4, **characterised by** at least one further fastening element (24a-b) which fastens the insulation element (18a-b) and the further housing element (22a-b) to one another at least by a material bond in the assembled state.

6. Refrigeration appliance apparatus according to one of claims 3 to 5, **characterised in that** the insulation element (18a-b) is provided, in the assembled state, to space the housing element (16a-b) and the further housing element (22a-b) apart from one another at least in sections.

7. Refrigeration appliance apparatus according to one of claims 3 to 6, **characterised in that** the insulation element establishes an in particular indirect connection between the housing element and the further housing element in the assembled state.

8. Refrigeration appliance apparatus according to one of claims 3 to 7, **characterised in that** the housing element and the further housing element do not have, in particular are without any, shared points in the assembled state.

9. Refrigeration appliance apparatus according to one of the preceding claims, **characterised in that** the insulation element (18a-b) fills up the intermediate space (14a-b) at least to a large extent.

10. Refrigeration appliance apparatus according to one of the preceding claims, **characterised in that** the insulation element (18a-b) consists, at least to a large extent, of PUR and/or EPS and/or EPP.

11. Refrigeration appliance apparatus according to one of the preceding claims, **characterised in that** the fastening element (20a-b) is a double-sided adhesive tape.

12. Refrigeration appliance apparatus according to one of the preceding claims, **characterised in that** the housing unit (12a-b), in particular the housing element (16a-b) and at least a further housing element (22a-b) of the housing unit (12a-b) does not have foaming apertures.

13. Refrigeration appliance, in particular refrigerator and/or freezer, with at least one refrigeration appliance apparatus (10a-b) according to one of the preceding claims.

14. Method for assembly of a refrigeration appliance apparatus (10a-b) according to one of claims 1 to 12, which is a subassembly of a refrigeration appliance, with at least one housing unit (12a-b) which defines at least one intermediate space (14a-b) and which has at least one housing element (16a-b) which delimits the intermediate space (14a-b) at least partially, and with at least one insulation element (18a-b) which is arranged inside the intermediate space (14a-b), wherein the housing unit (12a-b) rests on projections and/or is inserted into grooves, wherein at least one receiving compartment for food (30a) of a refrigeration appliance (26a) is divided into at least two temperature regions by means of the housing unit (12a-b) designed as a separating plate, wherein the insulation element (18a-b) and the housing element (16a-b) are fastened to one another at least by a material bond by means of at least one fastening element (20a-b) of the refrigeration appliance apparatus (10a-b), wherein the fastening element (20a-b) is designed as a planar element and as an adhesive layer, wherein the fastening element (20a-b) is arranged in a manner in which it extends over a proportion of at least 60 % of the surface of the housing element (16a-b) which faces the insulation element (18a-b) and/or of the surface of the insulation element (18a-b) which faces the housing element (16a-b), and wherein the insulation element (18a-b) is designed as a preformed element.

15. Method according to claim 14, **characterised in that** the fastening element (20a-b) is fastened to the insulation element (18a-b) before being fastened to the housing element (16a-b).

## Revendications

1. Dispositif d'appareil frigorifique (10a, 10b) qui est un sous-ensemble d'un appareil frigorifique (26a), avec au moins une unité de carcasse (12a-b), laquelle définit au moins un espace intermédiaire (14a-b) et présente au moins un élément de carcasse (16a-b) qui délimite au moins partiellement l'espace intermédiaire (14a-b), et avec au moins un élément d'isolation (18a-b) disposé dans au moins un état monté à l'intérieur de l'espace intermédiaire (14a-b), dans lequel l'unité de carcasse (12a-b) est formée sous la forme d'une plaque de séparation, dans lequel l'unité de carcasse (12a-b) est prévue pour une pose sur des saillies et/ou pour une insertion dans des rainures, dans lequel l'unité de carcasse (12a-b) formée sous forme de plaque de séparation est prévue afin de diviser, à l'état monté, au moins un espace d'accueil de denrées alimentaires (30a) d'un appareil frigorifique (26a) en au moins deux zones de température, dans lequel au moins un élément de fixation (20a, 20b) existe, lequel fixe, à l'état monté, l'élément d'isolation (18a-b) et l'élément de carcasse (16a-b) l'un à l'autre au moins par complémentarité de matières, dans lequel l'élément de fixation (20a-b) est formé sous la forme d'une couche adhésive et l'élément de fixation (20a-b) est formé sous la forme d'un élément plan et l'élément de fixation (20a-b) s'étend, dans l'au moins un état monté, sur au moins 60 %, de façon avantageuse sur au moins 70 %, de façon particulièrement avantageuse sur au moins 80 %, de préférence sur au moins 90 % et de façon particulièrement préférée sur au moins 95 % d'une surface de l'élément de carcasse (16a-b) dirigée vers l'élément d'isolation (18a-b) à l'état monté et/ou d'une surface de l'élément d'isolation (18a-b) dirigée vers l'élément de carcasse (16a-b) à l'état monté et dans lequel l'élément d'isolation (18a-b) est formé sous la forme d'un élément préformé.

2. Dispositif d'appareil frigorifique selon la revendication 1, **caractérisé en ce que** l'élément de fixation (20a-b) présente un plan d'extension principal, orienté à l'état monté au moins essentiellement en parallèle à un plan d'extension principal de l'élément de carcasse (16a-b).

3. Dispositif d'appareil frigorifique selon l'une des revendications précédentes, **caractérisé en ce que** l'unité de carcasse (12a-b) présente au moins un élément de carcasse supplémentaire (22a-b), lequel délimite au moins partiellement l'espace intermédiaire (14a-b) à l'état monté.

4. Dispositif d'appareil frigorifique selon la revendication 3, **caractérisé en ce que** l'élément de carcasse (16a-b) et l'élément de carcasse supplémentaire (22a-b) sont disposés de façon imbriquée.

5. Dispositif d'appareil frigorifique selon la revendication 3 ou 4, **caractérisé par** au moins un élément de fixation supplémentaire (24a-b) qui fixe, à l'état monté, l'élément d'isolation (18a-b) et l'élément de carcasse supplémentaire (22a-b) l'un à l'autre au moins par complémentarité de matières.

6. Dispositif d'appareil frigorifique selon l'une des revendications 3 à 5, **caractérisé en ce que** l'élément d'isolation (18a-b) est prévu afin d'écarter, à l'état monté, l'élément de carcasse (16a-b) et l'élément de carcasse supplémentaire (22a-b) au moins par sections l'un par rapport à l'autre.

7. Dispositif d'appareil frigorifique selon l'une des revendications 3 à 6, **caractérisé en ce que** l'élément d'isolation établit, à l'état monté, une liaison en particulier indirecte entre l'élément de carcasse et l'élément de carcasse supplémentaire.

8. Dispositif d'appareil frigorifique selon l'une des revendications 3 à 7, **caractérisé en ce qu'**à l'état monté, l'élément de carcasse et l'élément de carcasse supplémentaire sont exempts de, en particulier de quelconques, points communs.

9. Dispositif d'appareil frigorifique selon l'une des revendications précédentes, **caractérisé en ce que** l'élément d'isolation (18a-b) comble au moins en majeure partie l'espace intermédiaire (14a-b).

10. Dispositif d'appareil frigorifique selon l'une des revendications précédentes, **caractérisé en ce que** l'élément d'isolation (18a-b) se compose au moins en majeure partie de PUR et/ou d'EPS et/ou d'EPP.

11. Dispositif d'appareil frigorifique selon l'une des revendications précédentes, **caractérisé en ce que** l'élément de fixation (20a-b) est une bande adhésive double face.

12. Dispositif d'appareil frigorifique selon l'une des revendications précédentes, **caractérisé en ce que** l'unité de carcasse (12a-b), en particulier l'élément de carcasse (16a-b) et au moins un élément de carcasse supplémentaire (22a-b) de l'unité de carcasse (12a-b), est exempt d'orifices de moussage.

13. Appareil frigorifique, en particulier appareil de réfrigération et/ou appareil de congélation, avec au moins un dispositif d'appareil frigorifique (10a-b) selon l'une des revendications précédentes.

14. Procédé pour un montage d'un dispositif d'appareil frigorifique (10a-b) selon l'une des revendications 1 à 12, qui est un sous-ensemble d'un appareil frigorifique, avec au moins une unité de carcasse (12a-b), laquelle définit au moins un espace intermédiaire (14a-b) et présente au moins un élément de carcasse (16a-b) qui délimite au moins partiellement l'espace intermédiaire (14a-b), et avec au moins un élément d'isolation (18a-b) disposé à l'intérieur de l'espace intermédiaire (14a-b), dans lequel l'unité de carcasse (12a-b) est posée sur des saillies et/ou insérée dans des rainures, dans lequel au moins un espace d'accueil de denrées alimentaires (30a) d'un appareil frigorifique (26a) est divisé en au moins deux zones de température au moyen de l'unité de carcasse (12a-b) formée sous forme de plaque de séparation, dans lequel l'élément d'isolation (18a-b) et l'élément de carcasse (16a-b) sont fixés l'un à l'autre au moins par complémentarité de matières au moyen d'au moins un élément de fixation (20a-b) du dispositif d'appareil frigorifique (10a-b), dans lequel l'élément de fixation (20a-b) est formé sous la forme d'un élément plan et sous la forme d'une couche adhésive, dans lequel l'élément de fixation (20a-b) est disposé de façon à s'étendre sur au moins 60 % sur une surface de l'élément de carcasse (16a-b) dirigée vers l'élément d'isolation (18a-b) et/ou d'une surface de l'élément d'isolation (18a-b) dirigée vers l'élément de carcasse (16a-b) et dans lequel l'élément d'isolation (18a-b) est formé sous la forme d'un élément préformé.

15. Procédé selon la revendication 14, **caractérisé en ce que** l'élément de fixation (20a-b) est fixé à l'élément d'isolation (18a-b) avant une fixation à l'élément de carcasse (16a-b).
